# FASCICULE DE BREVET EUROPEEN

(11) **EP 3 985 295 B1**
(45) Date de publication et mention de la délivrance du brevet: **17.06.2026**
(21) Numéro de dépôt: 21202694.2
(22) Date de dépôt: 14.10.2021
(51) Int. Cl.: F16L 37/092

(54) **DISPOSITIF DE RACCORDEMENT FLUIDIQUE DE TYPE CARTOUCHE**
KARTUSCHENARTIGE FLÜSSIGKEITSVERBINUNGSVORRICHTUNG
CARTRIDGE-TYPE FLUID CONNECTION DEVICE

(30) Priorité: 15.10.2020 FR 2010579
(43) Date de publication de la demande: 20.04.2022
(73) Titulaire: Parker Hannifin EMEA S.à.r.l., 1163 Etoy (CH)
(72) Inventeur: HOUPERT, Mathieu, 35410 CHÂTEAUGIRON (FR)
(74) Mandataire: Cabinet Boettcher

(56) Documents cités:
- EP-A2- 2 410 229
- EP-B1- 2 410 229
- DE-A1- 102013 006 395

## Description

La présente invention concerne le domaine du transport de fluides liquides ou gazeux et plus particulièrement un dispositif de raccordement fluidique de type « cartouche » destiné à réaliser l'ancrage d'un tube dans un canal d'un élément de circuit ainsi que l'étanchéité du raccordement ainsi formé.

### ARRIERE PLAN DE L'INVENTION

On connaît des dispositifs de raccordement rapide de type cartouche qui sont destinés à être insérés dans un logement d'extrémité ménagé dans un canal d'un élément d'un circuit de transport de fluide tel qu'une pompe, un distributeur, un actionneur, un module pneumatique, un régulateur de débit ou de pression ou encore un tube.

Les documents EP 2 410 229 A2 et DE 10 2013 006395 A1 représentent des dispositifs de raccordement connus. Dans le document EP 2 410 229 A2, un cartouche est maintenu en position par un élément de fermeture.

Un tel dispositif comprend généralement un insert tubulaire pourvu de moyens pour son ancrage permanent dans l'élément de circuit, de moyens de retenue d'une extrémité d'un tube, et un joint d'étanchéité. Les moyens de retenue sont généralement réalisés sous la forme d'une rondelle à denture intérieure dont les dents (ou griffes) sont soulevées par flexion lors de l'introduction de l'extrémité du tube dans l'insert tubulaire et tendent à mordre le tube pour s'opposer à son extraction. Le joint d'étanchéité, le plus souvent torique, est associé à l'insert tubulaire de manière à être comprimé entre la paroi du logement et la surface extérieure de l'extrémité du tube.

Lorsque le dispositif est destiné à être soumis à de fortes sollicitations, par exemple quand il est implanté dans un circuit de freinage de poids lourds où un fluide circule à une pression relativement élevée, la rondelle utilisée est très raide de manière à pouvoir s'opposer à des efforts d'extraction importants. Il existe alors un risque que l'extrémité du tube s'écrase légèrement de sorte que toutes les dents de la rondelle ne mordent pas correctement la surface externe du tube. Ce phénomène peut notamment résulter d'une ovalisation de l'extrémité du tube due à un effort de flexion exercé sur celle-ci en amont du dispositif.

Pour obvier à cet inconvénient, il est connu de rigidifier l'extrémité du tube au moyen d'une fourrure métallique qui est rapportée dans le logement avant l'insertion de la cartouche, ou rapportée à l'extrémité du tube avant son introduction dans la cartouche. Cependant, il existe un risque que le tube soit emmanché dans l'insert sans que la fourrure ait été installée dans le logement ou à l'extrémité du tube.

Il a alors été envisagé de fixer la fourrure à une extrémité de l'insert. On connaît ainsi des dispositifs de raccordement dans lesquels l'insert et la fourrure forme une cartouche destinée à être emmanchée de manière étanche dans le logement de l'élément de circuit. L'insert comprend alors généralement une surface extérieure autour et en saillie radiale de laquelle s'étendent des épaulements retenant un ou plusieurs joints d'étanchéité, ce qui a pour effet de complexifier la forme externe de l'insert et d'augmenter le nombre d'éléments composant l'étanchéité du raccordement.

### OBJET DE L'INVENTION

L'invention a donc pour but de proposer un dispositif de raccordement d'un tube de type cartouche permettant d'obvier au moins en partie aux problèmes précités.

### RESUME DE L'INVENTION

A cet effet, l'invention propose un dispositif de raccordement d'un tube se présentant sous forme de cartouche insérable dans un logement d'extrémité d'un canal ménagé dans un élément de circuit. Le dispositif comprend :
- un insert tubulaire équipé extérieurement d'un moyen de son ancrage dans le logement et intérieurement d'un organe d'accrochage d'une portion d'extrémité du tube dans l'insert ;
- une fourrure comprenant une portion tubulaire qui s'étend dans une ouverture de passage de l'organe d'accrochage et qui est pourvue à une extrémité d'une collerette dont un fond forme une butée à l'emmanchement de la portion d'extrémité du tube dans le dispositif de raccordement ; et
- un élément d'étanchéité annulaire qui s'étend axialement entre la collerette et l'insert en reliant un bord de la collerette à une extrémité de l'insert et qui est agencé pour entrer en contact étanche à la fois avec la portion d'extrémité du tube et le logement.

Ainsi, la fourrure est reliée à l'insert par l'élément d'étanchéité et forme avec ces derniers une cartouche destinée à être emmanchée de manière étanche dans le logement de l'élément de circuit. Par ailleurs, l'élément d'étanchéité permet à lui seul d'assurer l'étanchéité du raccordement.

Selon une caractéristique particulière, l'élément d'étanchéité est emboîté élastiquement sur la collerette et/ou sur l'insert.

De manière particulière, au moins l'un du bord de la collerette et de l'insert est pourvu d'un redan annulaire externe pour assurer l'emboîtement élastique de l'élément d'étanchéité sur la collerette ou sur l'insert.

De manière particulière, le bord de la collerette) et l'insert sont tous deux pourvus d'un redan et les redans ont des diamètres différents, le diamètre du redan aménagé sur le bord de la collerette étant inférieur au diamètre du redan aménagé à l'extrémité de l'insert.

De manière particulière, les redans comprennent chacun une surface tronconique de retenue de l'élément d'étanchéité, la surface tronconique du redan aménagée sur le bord de la collerette ayant un demi-angle au sommet (α) inférieur à un demi-angle au sommet (β) de la surface tronconique du redan (3.4') aménagé à l'extrémité de l'insert (2')

De manière particulière, l'élément d'étanchéité présente un plan de symétrie orthogonal à une direction d'introduction de la portion d'extrémité du tube.

Selon une autre caractéristique particulière, l'insert possède un épaulement externe agencé pour former une butée à l'enfoncement du dispositif de raccordement dans le logement.

De manière particulière, le fond de la collerette et l'épaulement de l'insert sont espacés d'une distance inférieure à une profondeur du logement de manière à ce que la fourrure puisse être déplacée dans le logement par la portion d'extrémité du tube lors de son enfoncement dans le dispositif de raccordement.

De manière particulière, le fond de la collerette forme une butée au déplacement de la fourrure dans le logement.

De manière particulière, le moyen d'ancrage est une rondelle déformable extérieurement dentée.

De manière particulière, l'organe d'accrochage est un jonc monté mobile à l'intérieur de l'insert.

De manière particulière, l'élément d'étanchéité forme un obstacle à la mobilité du jonc.

Selon une autre caractéristique particulière, un joint anticontamination est monté à une extrémité de l'insert.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1A est une vue en coupe axiale d'un dispositif de raccordement selon un mode de réalisation particulier de l'invention, avant connexion d'une portion d'extrémité d'un tube ;
- la figure 1B est une vue analogue à la figure 1A après connexion de la portion d'extrémité de tube ;
- la figure 2A est une vue en coupe partielle d'une variante du dispositif de raccordement illustré à la figure 1A, avant connexion d'une portion d'extrémité d'un tube ;
- la figure 2B est une vue analogue à la figure 2A, pendant la connexion de la portion d'extrémité de tube ;
- la figure 2C est une vue analogue à la figure 2A après connexion de la portion d'extrémité de tube.

### DESCRIPTION DETAILLEE DE L'INVENTION

L'invention est ici décrite en application au raccordement d'un tube 100 formant un premier conduit de transport de fluide à un deuxième conduit de transport de fluide formé par un canal ménagé dans un élément de circuit 200 émetteur ou récepteur de fluide.

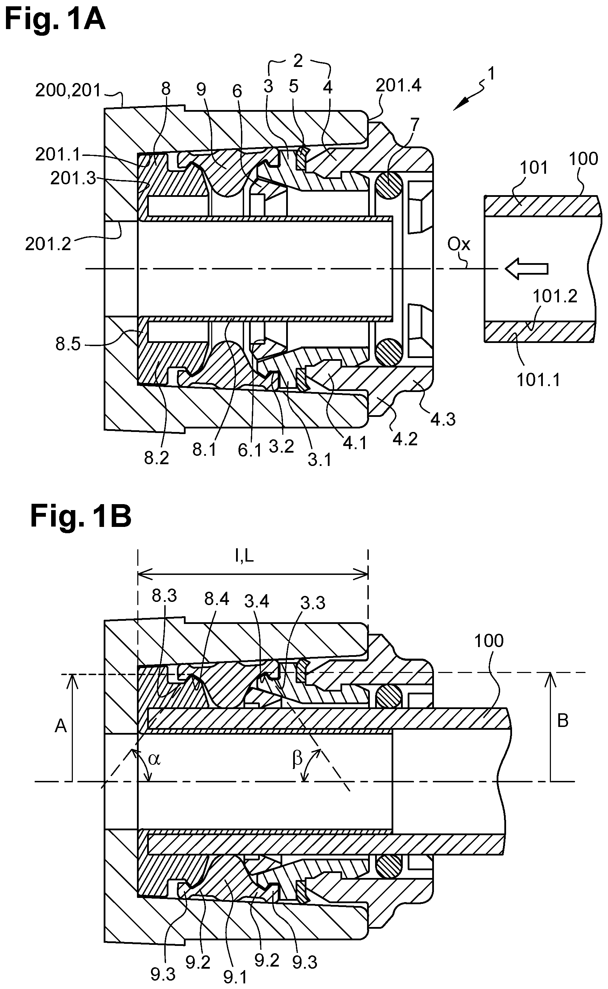

En référence aux figures 1A et 1B, un dispositif de raccordement selon l'invention, généralement désigné en 1, se présente sous la forme d'une cartouche insérable dans un logement 201 d'extrémité du canal de l'élément de circuit 200. On comprendra ainsi qu'aucune rotation du dispositif de raccordement 1 n'est nécessaire à son introduction dans le logement 201.

Le logement 201 se présente ici sous la forme d'un alésage définissant une direction Ox d'introduction du dispositif de raccordement 1. L'alésage est divisé axialement en deux parties. On distingue de droite à gauche une première partie 201.1 de forme sensiblement tronconique qui est destinée à recevoir le dispositif de raccordement 1 et qui a une extrémité débouchant sur une surface externe 201.4 de l'élément de circuit 200, et une deuxième partie 201.2 de forme cylindrique ayant un diamètre inférieur à celui de la première partie 201.1 permettant le transport de fluide. Entre les première et deuxième parties 201.1, 201.2, une face d'appui 201.3 transversale constitue un fond du logement 201.

Le dispositif de raccordement 1 comprend un insert 2 de forme globalement tubulaire destiné à venir partiellement se loger dans le logement 201. L'insert 2 comporte ici deux parties coaxiales entre elles : une douille 3 et une bague 4 de maintien. Une partie de la douille 3 est introduite et maintenue à force dans la bague 4 selon une technique connue de clipsage (technique également appelée emboîtement élastique).

Une rondelle 5 d'ancrage est maintenue entre une extrémité 4.1 de la bague 4 et un épaulement 3.1 s'étendant autour et en saille d'une surface extérieure de la douille 3. La rondelle 5, qui est connue en elle-même, est pourvue extérieurement de dents élastiquement déformables formant des moyens d'ancrage de l'insert 2 dans le logement 201.

Une extrémité 3.2 de la douille 3 forme un orifice de sortie de l'insert 2 et a une surface intérieure de forme tronconique pour coopérer avec une surface extérieure d'un jonc 6 mobile axialement. Le jonc 6 est pourvu intérieurement d'une aspérité 6.1 destinée à mordre une surface extérieure 101.1 d'une portion d'extrémité 101 du tube 100. L'agencement de la douille 3 et du jonc 6 est tel qu'un déplacement axial du jonc 6 vers l'intérieur de la douille 3 engendre un déplacement radial de l'aspérité 6.1 du jonc 6 vers l'axe central de la douille 3. L'aspérité 6.1 est conformée pour ne pas s'opposer à l'emmanchement de la portion d'extrémité 101 du tube 100 dans l'insert 2 mais aussi pour s'opposer au retrait du tube 100 lorsqu'il est suffisamment emmanché pour coopérer avec le jonc 6.

La bague 4 possède une surface extérieure autour et en saillie de laquelle s'étend un épaulement 4.2 destiné à former une première butée à l'enfoncement du dispositif de raccordement 1 dans le logement 201 en venant en contact avec la surface externe 201.4 de l'élément de circuit 200.

Une extrémité 4.3 libre de la bague 4 forme un orifice d'entrée de l'insert 2 et a une surface intérieure de forme cylindrique pour recevoir un joint anticontamination 7, dit aussi joint anti-poussière, dans le prolongement de la douille 3. Le joint anticontamination 7 est de section circulaire, son diamètre extérieur étant sensiblement supérieur au diamètre de l'extrémité 4.3 de la bague 4 et son diamètre intérieur étant sensiblement inférieur au diamètre extérieur de la portion d'extrémité 101 du tube 100, de sorte qu'aucun contaminant solide ne peut rentrer à l'intérieur du dispositif de raccordement 1 lorsque la portion d'extrémité 101 du tube 100 est suffisamment emmanchée dans l'insert 2.

Le dispositif de raccordement 1 comprend également une fourrure 8 destinée à rigidifier la portion d'extrémité 101 du tube 100 insérée dans le dispositif de raccordement 1, en particulier au niveau du jonc 6.

La fourrure 8 comporte une portion tubulaire 8.1 s'étendant dans le jonc 6 et l'insert 2 coaxialement à ceux-ci. La portion tubulaire 8.1 est destinée à être engagée dans la portion d'extrémité 101 du tube 100 de telle manière qu'une surface extérieure de la portion tubulaire 8.1 vienne sensiblement au contact d'une surface intérieure 101.2 de la portion d'extrémité 101 du tube 100. Le diamètre extérieur de la portion tubulaire 8.1 est ainsi sensiblement égal au diamètre intérieur de la portion d'extrémité 101 du tube 100.

La fourrure 8 comporte également une collerette 8.2 agencée à une extrémité de la portion tubulaire 8.1 pour recevoir la portion d'extrémité 101 du tube 100. Un fond 8.5 de la collerette 8.2 forme d'un côté une butée à l'introduction de la portion d'extrémité 101 dans le dispositif de raccordement 1, et de l'autre une deuxième butée à l'enfoncement du dispositif de raccordement 1 dans le logement 201 en venant en contact avec la face d'appui 201.3 du logement 201.

Le dispositif de raccordement 1 comprend par ailleurs un élément d'étanchéité 9 annulaire élastiquement déformable reliant la fourrure 8 à l'insert 2. L'élément d'étanchéité 9 comporte :
- un corps principal 9.1 s'étendant entre une extrémité de la collerette 8.2 et l'extrémité 3.2 de la douille 3 pour assurer l'étanchéité du raccordement, et
- deux extensions latérales 9.2 s'étendant symétriquement en saillie axiale de part et d'autre du corps principal 9.1 pour former des moyens de liaison à la fourrure 8 et à la douille 3.

Le corps principal 9.1 est de section arrondie et comprend un bourrelet externe annulaire conformé pour être en contact avec la première partie 201.1 tronconique du logement 201 lorsque le dispositif de raccordement 1 est en place dans ledit logement 201, et un bourrelet interne annulaire pour être en contact avec la surface extérieure 101.1 de la portion d'extrémité 101 du tube 100 lorsque ladite portion d'extrémité 101 du tube 100 est suffisamment emmanchée dans le dispositif de raccordement 1. Par ailleurs, le bourrelet interne du corps principal 9.1 forme une butée au déplacement axial du jonc 6.

Les extensions latérales 9.2 comprennent à leur extrémité un bourrelet 9.3 ayant une circonférence extérieure est destinée à être en contact avec la première partie 201.1 tronconique du logement 201 lorsque le dispositif de raccordement 1 est en place dans le logement 201, et une circonférence intérieure logée par emboîtement élastique dans une gorge 3.3, 8.3 annulaire aménagée à l'extrémité 3.2 de la douille 3 et de la collerette 8.2 de la fourrure 8 respectivement pour relier l'élément d'étanchéité à l'insert 2 et à la fourrure 8. La gorge 3.3 est délimitée par un redan 3.4 annulaire s'étendant en saillie radiale de l'extrémité 3.2 de la douille 3, et la gorge 8.3 est délimitée par un redan 8.4 annulaire s'étendant en saillie radiale de l'extrémité de la collerette 8.2. Les redans 3.4, 8.4 sont orientés vers l'extérieur du dispositif de raccordement 1 et présentent respectivement un diamètre A et un diamètre B.

Ainsi, le bourrelet interne du corps principal 9.1 forme une ligne d'étanchéité intérieure destinée à venir en contact avec la surface extérieure 101.1 de la portion d'extrémité 101 du tube 100, et le bourrelet externe du corps principal 9.1 et les parties extérieures des extensions latérales 9.2 forment trois lignes d'étanchéité extérieures destinées à venir en contact avec la première partie 201.1 tronconique du logement 201.

Le redan 8.4 annulaire comprend une première portion ayant une surface tronconique qui est en contact avec l'un des bourrelets 9.3 et qui forme un angle α avec la direction Ox pour assurer le maintien du bourrelet 9.3 dans la gorge 8.3 annulaire, et une deuxième portion conformée pour faciliter l'emboîtement élastique dudit bourrelet 9.3 dans la gorge 8.3. L'angle α est aussi appelé demi-angle au sommet de la première portion du redan 8.4.

De manière similaire, le redan 3.4 annulaire comprend une première portion ayant une surface tronconique qui est en contact avec l'autre des bourrelets 9.3 et qui forme un angle β avec la direction Ox pour assurer le maintien du bourrelet 9.3 dans la gorge 3.3 annulaire, et une deuxième portion conformée pour faciliter l'emboîtement élastique dudit bourrelet 9.3 dans la gorge 3.3. L'angle β est aussi appelé demi-angle au sommet de la première portion du redan 3.4

L'élément d'étanchéité 9 forme ainsi un manchon reliant et fixant l'extrémité de la collerette 8.2 à l'extrémité 3.2 de la douille 3 de sorte que le dispositif de raccordement 1 composé de la fourrure 8, de l'élément d'étanchéité 9, de l'insert 2, du jonc 6 et de la rondelle 5 forme une cartouche insérable dans le logement 201 de l'élément de circuit 200.

L'épaulement 4.2 de la bague 4 et le fond 8.5 de la collerette 8.2 destiné à venir en contact avec la face d'appui 201.3 sont ici espacés, suivant la direction Ox, d'une distance 1 sensiblement égale à une profondeur L du logement 201 définie par la face d'appui 201.3 du logement 201 et la surface externe 201.4 de l'élément de circuit 200.

Le fonctionnement du dispositif de raccordement 1 va maintenant être détaillé en regard des figures 1A et 1B.

La cartouche formée par le dispositif de raccordement 1 est tout d'abord introduite, suivant la direction Ox, dans le logement 201 d'extrémité du canal de l'élément de circuit 200 jusqu'à ce que l'épaulement 4.2 externe de la bague 4 vienne en contact avec la surface externe 201.4 du logement 201. Le fond 8.5 de la collerette 8.2 est alors sensiblement en contact avec la face d'appui 201.3 du logement 201 et la rondelle 5 s'oppose, de façon connue en soi, au retrait du dispositif de raccordement 1.

Une fois le dispositif de raccordement 1 correctement ancré dans le logement 201, le tube 100 peut être inséré dans l'insert 2 et emmanché sur la fourrure 8 jusqu'à ce que la portion d'extrémité 101 du tube 100 vienne en butée contre le fond 8.5 de la collerette 8.2.

La portion d'extrémité 101 du tube 100 a alors traversé le jonc 6 et l'élément d'étanchéité 9, de sorte que la portion d'extrémité 101 est assujettie de manière étanche dans le logement 201 de l'élément de circuit 200.

Toute force d'extraction exercée sur le tube 100 entraîne, de façon connue en soi, un déplacement axial du jonc 6 dont l'aspérité 6.1 est en contact avec la surface extérieure 101.1 de la portion d'extrémité 101 du tube 100. La force de serrage du jonc 6 augmente en cas recul du tube 100.

La sensation haptique ressentie par l'opérateur lorsque la portion d'extrémité 101 du tube 100 arrive en butée contre le fond de la collerette 8.2 forme ainsi un témoin de bonne connexion du tube 100 dans le logement 201.

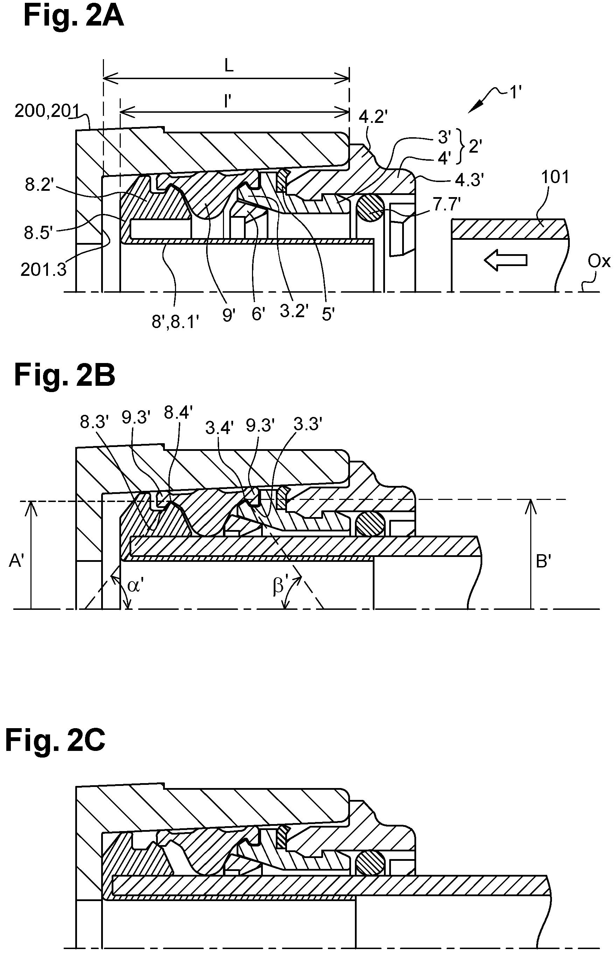

La figures 2A illustre un dispositif de raccordement 1' selon un deuxième mode de réalisation de l'invention. Le dispositif de raccordement 1' diffère du dispositif de raccordement 1 en ce que la distance *l'* séparant l'épaulement 4.2' de la bague 4' et le fond 8.5' de la collerette 8.2' destinée à venir en contact avec la face d'appui 201.3 est inférieure à la profondeur L du logement 201.

Le fonctionnement du dispositif de raccordement 1' va maintenant être détaillé en regard des figures 2A, 2B et 2C.

De manière similaire au premier mode de réalisation, la cartouche formée par le dispositif de raccordement 1' est tout d'abord introduite, suivant la direction Ox, dans le logement 201 de l'élément de circuit 200 jusqu'à ce que l'épaulement 4.2' externe de la bague 4' vienne en contact avec la surface externe 201.4 du logement 201. Le fond 8.5' de la collerette 8.2' est alors éloigné de la face d'appui 201.3 du logement 201 et la rondelle 5' s'oppose au retrait du dispositif de raccordement 1' (figure 2A).

Une fois le dispositif de raccordement 1' correctement ancré dans le logement 201, le tube 100 est inséré dans l'insert 2'.

Dans un premier temps, la portion d'extrémité 101 du tube 100 est emmanchée sur la fourrure 8' jusqu'à ce qu'elle vienne en butée contre le fond 8.5' de la collerette 8.2' (figure 2B).

En poursuivant l'emmanchement du tube 100 dans le dispositif de raccordement, la portion d'extrémité 101 du tube 100 exerce sur la collerette 8.2' un effort axial tendant à déplacer la fourrure 8' vers la face d'appui 201.3 du logement 201. Le déplacement de la fourrure 8' engendre une déformation élastique de l'élément d'étanchéité 9' et en particulier de ses bourrelets 9.3'.

Lorsque l'effort axial est suffisant, la déformation des bourrelets 9.3' est telle que l'un d'eux sort de la gorge 3.3', 8.3' dans laquelle il était logé et entraîne la désolidarisation de l'élément d'étanchéité 9' avec la fourrure 8' (figure 2C) ou avec la douille 3' (non représentée).

Afin de favoriser la désolidarisation de l'élément d'étanchéité 9' avec la fourrure 8', on pourra par exemple dimensionner les redans 3.4', 8.4' annulaires de manière à ce que le demi-angle au sommet α' soit inférieur au demi-angle au sommet β' et/ou que le diamètre A' soit inférieur au diamètre B'. La mobilité axiale du jonc 6' sera alors inchangée.

A l'inverse, pour favoriser la désolidarisation de l'élément d'étanchéité 9' avec la douille 3', on pourra par exemple dimensionner les redans 3.4', 8.4' annulaires de manière à ce que le demi-angle au sommet α' soit supérieur au demi-angle au sommet β' et/ou que le diamètre A' soit supérieur au diamètre B'. La mobilité axiale du jonc 6' sera alors augmentée.

Les sensations haptiques ressenties par l'opérateur lorsque la portion d'extrémité 101 du tube 100 arrive en butée contre le fond 8.5' de la collerette 8.2' et lorsque fond 8.5' de collerette 8.2' arrive en butée contre la face d'appui 201.3, forment alors un témoin de bonne connexion du tube 100 dans le logement 201.

Bien entendu, l'invention n'est pas limitée au mode de réalisation décrit mais englobe toute variante entrant dans le champ de l'invention telle que définie par les revendications.

Bien qu'ici l'élément d'étanchéité 9, 9' présente un plan de symétrie orthogonal à la direction Ox d'introduction, il peut ne pas être symétrique.

Bien qu'ici la retenue du dispositif de raccordement 1, 1' dans le logement 201 soit assurée par une rondelle 5, 5' extérieurement dentée, elle peut aussi être assurée par tout autre moyen tel que des aspérités en saillie radiale de la bague 4, 4' ou des bras élastiquement déformables.

Bien qu'ici la retenue de la portion d'extrémité 101 du tube 100 dans le dispositif de raccordement 1, 1' soit assurée par un jonc 6, 6', elle peut aussi être assurée par tout autre moyen tel qu'une rondelle intérieurement dentée ou des bras élastiquement déformables.

Bien qu'ici l'élément d'étanchéité 9, 9' soit emboîté élastiquement sur la fourrure 8, 8' et la douille 3, 3', tout autre moyen de liaison peut être envisagé (du type rigide, du type à rupture...). Par ailleurs, l'élément d'étanchéité 9, 9' peut être relié à la fourrure 8, 8' et à la douille 3,3' par des moyens de liaison de type différent.

Bien qu'ici l'élément d'étanchéité 9, 9' soit emboîté élastiquement sur la fourrure 8, 8' et sur la douille 3, 3', il peut aussi être emboîté élastiquement dans la fourrure 8, 8' et/ou dans la douille 3, 3'. Le redan 3.4, 3.4' et/ou le redan 8.4', 8.4 seront alors orientés vers l'intérieur du dispositif de raccordement de manière à définir une gorge de réception de la partie supérieure des bourrelets 9.3, 9.3'.

Bien qu'ici la partie 201.1 du logement 201 dans laquelle est inséré le dispositif de raccordement 1, 1' soit de forme tronconique, elle peut aussi être de forme cylindrique ou étagée.

## Revendications

1. Dispositif de raccordement (1, 1') d'un tube (100) se présentant sous forme d'une cartouche insérable dans un logement (201) d'extrémité d'un canal ménagé dans un élément (200) de circuit, le dispositif comprenant :
- un insert (2, 2') tubulaire équipé intérieurement d'un organe d'accrochage (6, 6') d'une portion d'extrémité (101) du tube dans l'insert ;
- une fourrure (8, 8') comprenant une portion tubulaire (8.1, 8.1') qui s'étend dans une ouverture de passage de l'organe d'accrochage et qui est pourvue à une extrémité d'une collerette (8.2, 8.2') dont un fond (8.5, 8.5') forme une butée à l'emmanchement de la portion d'extrémité du tube dans le dispositif de raccordement ; et
- un élément d'étanchéité (9, 9') annulaire qui s'étend entre la collerette (8.2, 8.2') et l'insert (2, 2') en reliant un bord de la collerette à une extrémité (3.2, 3.2') de l'insert et qui est agencé pour entrer en contact étanche à la fois avec la portion d'extrémité du tube et le logement, **caractérisé en ce que** l'insert tubulaire est équipé extérieurement d'un moyen de son ancrage (5, 5') dans le logement.

2. Dispositif de raccordement (1, 1') selon la revendication 1, dans lequel l'élément d'étanchéité (9, 9') est emboîté élastiquement sur la collerette (8.2, 8.2') et/ou sur l'insert (2, 2').

3. Dispositif de raccordement (1, 1') selon la revendication 2, dans lequel au moins l'un du bord de la collerette (8.2, 8.2') et de l'insert (2, 2') est pourvu d'un redan (3.4, 3.4', 8.4, 8.4') annulaire externe pour assurer l'emboîtement élastique de l'élément d'étanchéité (9, 9') sur la collerette (8.2, 8.2') ou sur l'insert (2, 2').

4. Dispositif de raccordement (1') selon la revendication 3, dans lequel le bord de la collerette (8.2, 8.2') et l'insert (2, 2') sont tous deux pourvus d'un redan et les redans (3.4', 8.4') ont des diamètres (A', B') différents, le diamètre (A') du redan (8.4') aménagé sur le bord de la collerette (8.2') étant inférieur au diamètre (B') du redan (3.4') aménagé à l'extrémité de l'insert (2').

5. Dispositif de raccordement (1') selon la revendication 4, dans lequel les redans (3.4', 8.4') comprennent chacun une surface tronconique de retenue de l'élément d'étanchéité (9'), la surface tronconique du redan (8.4') aménagée sur le bord de la collerette (8.2') ayant un demi-angle au sommet (α) inférieur à un demi-angle au sommet (β) de la surface tronconique du redan (3.4') aménagé à l'extrémité de l'insert (2').

6. Dispositif de raccordement (1, 1') selon l'une quelconque des revendications précédentes, dans lequel l'élément d'étanchéité (9, 9') présente un plan de symétrie orthogonal à une direction (Ox) d'introduction de la portion d'extrémité (101) du tube (100).

7. Dispositif de raccordement (1, 1') selon l'une quelconque des revendications précédentes, dans lequel l'insert (2, 2') possède un épaulement (4.2, 4.2') externe agencé pour former une butée à l'enfoncement du dispositif de raccordement (1, 1') dans le logement (201).

8. Dispositif de raccordement (1, 1') selon l'une quelconque des revendications précédentes, dans lequel le moyen d'ancrage est une rondelle (5, 5') déformable extérieurement dentée.

9. Dispositif de raccordement (1, 1') selon l'une quelconque des revendications précédentes, dans lequel l'organe d'accrochage (6, 6') est un jonc monté mobile à l'intérieur de l'insert (2, 2').

10. Dispositif de raccordement (1, 1') selon la revendication 9, dans lequel l'élément d'étanchéité (9, 9') forme un obstacle à la mobilité du jonc (6, 6').

11. Dispositif de raccordement (1, 1') selon l'une quelconque des revendications précédentes, comprenant un joint anticontamination (7, 7') monté à une extrémité (4.3, 4.3') de l'insert (2, 2').

12. Ensemble comprenant un dispositif de raccordement (1') selon l'une quelconque des revendications précédentes et un élément de circuit dans lequel est ménagé un canal ayant une extrémité pourvue d'un logement (201) d'insertion du dispositif de raccordement, le fond (8.5') de la collerette (8.2') et l'épaulement (4.2') de l'insert (2') étant espacés d'une distance (l') inférieure à une profondeur (L) du logement (201) de manière à ce que la fourrure (8) puisse être déplacée dans le logement par la portion d'extrémité (101) du tube (100) lors de son enfoncement dans le dispositif de raccordement.

13. Ensemble selon la revendication 12 dans lequel le fond (8.5') de la collerette (8.2') forme une butée au déplacement de la fourrure (8) dans le logement (201).

## Patentansprüche

1. Vorrichtung zum Anschließen (1, 1') eines Rohrs (100), das in Form einer Kartusche vorhanden ist, die in eine Aufnahme (201) am Ende eines Kanals, der in einem Schaltungselement (200) vorgesehen ist, eingesetzt werden kann, wobei die Vorrichtung umfasst:
- einen rohrförmigen Einsatz (2, 2'), der innen mit einem Element zum Halten (6, 6') eines Endabschnitts (101) des Rohrs in dem Einsatz ausgestattet ist;
- eine Hülle (8, 8'), umfassend einen rohrförmigen Abschnitt (8.1, 8.1'), der sich in einer Durchgangsöffnung des Befestigungselements erstreckt und an einem Ende mit einem Kragen (8.2, 8.2') versehen ist, bei dem ein Boden (8.5, 8.5') einen Anschlag für das Einstecken des Endabschnitts des Rohrs in die Anschlussvorrichtung bildet; und
- ein ringförmiges Dichtungselement (9, 9'), das sich zwischen dem Kragen (8.2, 8.2') und dem Einsatz (2, 2') erstreckt und einen Rand des Kragens mit einem Ende (3.2, 3.2') des Einsatzes verbindet und derart vorgesehen ist, dass es sowohl mit dem Endabschnitt des Rohrs als auch mit der Aufnahme in dichten Kontakt gelangt,
**dadurch gekennzeichnet, dass** der rohrförmige Einsatz außen mit einem Mittel zu seiner Verankerung (5, 5') in der Aufnahme ausgestatte ist.

2. Anschlussvorrichtung (1, 1') nach Anspruch 1, bei der das Dichtungselement (9, 9') elastisch auf den Kragen (8.2, 8.2') und/oder auf den Einsatz (2, 2') aufgesteckt ist.

3. Anschlussvorrichtung (1, 1') nach Anspruch 2, bei der mindestens einer des Randes des Kragens (8.2, 8.2') und des Einsatzes (2, 2') mit einem äußeren ringförmigen Vorsprung (3.4, 3.4', 8.4, 8.4') versehen ist, um das elastische Aufstecken des Dichtungselements (9, 9') auf den Kragen (8.2, 8.2') oder auf den Einsatz (2, 2') zu gewährleisten.

4. Anschlussvorrichtung (1') nach Anspruch 3, bei der der Rand des Kragens (8.2, 8.2') und der Einsatz (2, 2') beide mit einem Absatz versehen sind, und die Vorsprünge (3.4', 8.4') unterschiedliche Durchmesser (A', B') haben, wobei der Durchmesser (A') des Absatzes (8.4'), der auf dem Rand des Kragens (8.2') angeordnet ist, kleiner als der Durchmesser (B') des Vorsprungs (3.4'), der am Ende des Einsatzes (2') angeordnet ist, ist.

5. Anschlussvorrichtung (1') nach Anspruch 4, bei der die Absätze (3.4', 8.4') jeweils eine kegelstumpfartige Fläche zum Halten des Dichtungselements (9') umfassen, wobei die kegelstumpfartige Fläche des Absatzes (8.4'), der auf dem Rand des Kragens (8.2') angeordnet ist, einen Halbwinkel am Scheitel (α) hat, der kleiner als ein Halbwinkel am Scheitel (β) der kegelstumpfartigen Fläche des Vorsrpungs (3.4'), der am Ende des Einsatzes (2') angeordnet ist, ist.

6. Anschlussvorrichtung (1, 1') nach einem der vorhergehenden Ansprüche, bei der das Dichtungselement (9, 9') eine Symmetrieebene orthogonal zu einer Einführrichtung (Ox) des Endabschnitts (101) des Rohrs (100) aufweist.

7. Anschlussvorrichtung (1, 1') nach einem der vorhergehenden Ansprüche, bei der der Einsatz (2, 2') einen äußeren Absatz (4.2, 4,2') besitzt, der dazu vorgesehen ist, einen Anschlag für das Einstecken der Anschlussvorrichtung (1, 1') in die Aufnahme (201) zu bilden.

8. Anschlussvorrichtung (1, 1') nach einem der vorhergehenden Ansprüche, bei der das Verankerungsmittel eine außen gezahnte verformbare Scheibe (5, 5') ist.

9. Anschlussvorrichtung (1, 1') nach einem der vorhergehenden Ansprüche, bei der das Halteelement (6, 6') ein Ring ist, der beweglich innerhalb des Einsatzes (2, 2') montiert ist.

10. Anschlussvorrichtung (1, 1') nach Anspruch 9, bei der das Dichtungselement (9, 9') ein Hindernis für die Beweglichkeit des Rings (6, 6') bildet.

11. Anschlussvorrichtung (1, 1') nach einem der vorhergehenden Ansprüche, umfassend eine Dichtung zur Verhinderung von Verschmutzung (7, 7'), die an einem Ende (4.3, 4.3') des Einsatzes (2, 2') montiert ist.

12. Anordnung, umfassend eine Anschlussvorrichtung (1') nach einem der vorhergehenden Ansprüche und ein Schaltungselement, in dem ein Kanal vorgesehen ist, der ein Ende aufweist, das mit einer Aufnahme (201) zum Einsetzen der Anschlussvorrichtung versehen ist, wobei der Boden (8.5') des Kragens (8.2') und der Absatz (4.2') des Einsatzes (2') um einen Abstand (1') entfernt sind, der geringer als eine Tiefe (L) der Aufnahme (201) ist, so dass die Hülle (8) in der Aufnahme durch den Endabschnitt (101) des Rohrs (100) bei seinem Einstecken in die Anschlussvorrichtung verschoben werden kann.

13. Anordnung nach Anspruch 12, bei der der Boden (8.5') des Kragens (8.2') einen Anschlag für das Verschieben der Hülle (8) in der Aufnahme (201) bildet.

## Claims

1. Device (1, 1') for connecting a tube (100) in the form of a cartridge insertable into an end housing (201) of a channel provided in a circuit element (200), the device comprising:
- a tubular insert (2, 2') provided internally with a member (6, 6') for hooking an end portion (101) of the tube into the insert;
- a bushing (8, 8') comprising a tubular portion (8.1, 8.1') that extends in a through opening of the hooking member and that is provided at one end with a collar (8.2, 8.2') a bottom (8.5, 8.5') of which forms an abutment when the end portion of the tube is fitted into the connecting device; and
- an annular sealing element (9, 9') that extends between the collar (8.2, 8.2') and the insert (2, 2') by connecting an edge of the collar to an end (3.2, 3.2') of the insert and that is arranged to come into sealed contact both with the end portion of the tube and the housing, **characterised in that** the tubular insert is provided externally with means for anchoring it (5, 5') in the housing.

2. Connecting device (1, 1') according to claim 1, wherein the sealing element (9, 9') is elastically nested on the collar (8.2, 8.2') and/or on the insert (2, 2').

3. Connecting device (1, 1') according to claim 2, wherein at least one of the edge of the collar (8.2, 8.2') and of the insert (2, 2') is provided with an external annular step (3.4, 3.4', 8.4, 8.4') to ensure the elastic nesting of the sealing element (9, 9') on the collar (8.2, 8.2') or on the insert (2, 2').

4. Connecting device (1') according to claim 3, wherein the edge of the collar (8.2, 8.2') and the insert (2, 2') are both provided with a step and the steps (3.4', 8.4') have different diameters (A', B'), the diameter (A') of the step (8.4') arranged on the edge of the collar (8.2') being less than the diameter (B') of the step (3.4') arranged at the end of the insert (2').

5. Connecting device (1') according to claim 4, wherein the steps (3.4', 8.4') each comprise a frustoconical surface for retaining the sealing element (9'), the frustoconical surface of the step (8.4') arranged on the edge of the collar (8.2') having a half-angle at the apex (α) less than a half-angle at the apex (β) of the frustoconical surface of the step (3.4') arranged at the end of the insert (2').

6. Connecting device (1, 1') according to any one of the preceding claims, wherein the sealing member (9, 9') has a plane of symmetry orthogonal to a direction (Ox) of introduction of the end portion (101) of the tube (100).

7. Connecting device (1, 1') according to any one of the preceding claims, wherein the insert (2, 2') has an external shoulder (4.2, 4.2') arranged to form an abutment when the connecting device (1, 1') is pushed into the housing (201).

8. Connecting device (1, 1') according to any one of the preceding claims, wherein the anchoring means is an externally deformable toothed washer (5, 5').

9. Connecting device (1, 1') according to any one of the preceding claims, wherein the hooking member (6, 6') is a bead movably mounted inside the insert (2, 2').

10. Connecting device (1, 1') according to claim 9, wherein the sealing element (9, 9') forms an obstacle to the mobility of the bead (6, 6').

11. Connecting device (1, 1') according to any preceding claim, including an anti-contamination seal (7, 7') mounted at one end (4.3, 4.3') of the insert (2, 2').

12. Assembly comprising a connecting device (1') according to any one of the preceding claims and a circuit element in which a channel is provided having an end provided with a housing (201) for inserting the connecting device, the bottom (8.5') of the collar (8.2') and the shoulder (4.2') of the insert (2') being spaced apart by a distance (l') less than a depth (L) of the housing (201) so that the bushing (8) can be moved in the housing by the end portion (101) of the tube (100) when it is pushed into the connecting device.

13. Assembly according to claim 12, wherein the bottom (8.5') of the collar (8.2') forms an abutment against the movement of the bushing (8) in the housing (201).
